(19) Europäisches Patentamt
European Patent Office
Office européen des brevets

(11) **EP 2 639 697 B1**

(12) **EUROPÄISCHE PATENTSCHRIFT**

(45) Veröffentlichungstag und Bekanntmachung des Hinweises auf die Patenterteilung:
**22.10.2014 Patentblatt 2014/43**

(51) Int Cl.:
***G06F 11/07*** *(2006.01)*      ***G06F 11/16*** *(2006.01)*
***G06F 11/18*** *(2006.01)*

(21) Anmeldenummer: **13158613.3**

(22) Anmeldetag: **11.03.2013**

(54) **System der Messwertüberwachung und Abschaltung bei Auftreten von Messwertabweichungen**

System for monitoring measurement values and shutting down in the case of measurement value deviations

Système de surveillance de valeur mesurée et d'arrêt lors de la survenue d'écarts de valeur mesurée

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.03.2012 DE 102012004844**

(43) Veröffentlichungstag der Anmeldung:
**18.09.2013 Patentblatt 2013/38**

(73) Patentinhaber: **PHOENIX CONTACT GmbH & Co. KG**
**32825 Blomberg (DE)**

(72) Erfinder:
• **Teutenberg, Jürgen**
  **59602 Rüthen (DE)**

• **Donbou Kenfouet, Celarie Marceraus**
  **31812 Bad Pyrmont (DE)**
• **Rohs, Markus**
  **32825 Blomberg (DE)**

(74) Vertreter: **Blumbach Zinngrebe**
**Patentanwälte**
**Alexandrastrasse 5**
**65187 Wiesbaden (DE)**

(56) Entgegenhaltungen:
**EP-A1- 1 962 193**      **WO-A1-2007/091005**
**US-A1- 2010 270 987**      **US-A1- 2012 023 389**

**Beschreibung**

In der Sicherheitstechnik existiert das Problem der sicheren Abschaltung, basierend auf durchgeführte Messungen. Üblicherweise werden zweikanalige Strukturen aufgebaut, um Messungen doppelt durchzuführen. Fällt ein Kanal aus, so übernimmt der andere Kanal die sichere Abschaltung. Es ist bekannt, zur Durchführung dieser Aufgaben zwei Mikrokontroller einzusetzen.

Aus US 2010/0270987 A1 ist ein System der Ausgabe eines Vital-Ausgangssignals für einen Prozessor bekannt, bei dem zwei unabhängige Schaltungen zwischen dem Prozessor und zwei oder mehreren Schaltern vorgesehen sind, die eine Anwahl von Vital-Ausgängen an- und ausschalten. Die beiden unabhängigen Schaltungen kooperieren miteinander und führen lokale Diagnosevorgänge für den gewünschten Vital-Ausgangszustand unabhängig von dem Prozessor durch.

Mit EP 1 962 193 A1 ist eine Schaltungsvorrichtung zum Ansteuern einer Last bekannt, die eine Zentraleinheit, drei Register und zwei Vergleichslogiken umfasst. Die erste Vergleichslogik vergleicht den Inhalt des zweiten Registers mit dem des dritten Registers und sendet einen Interrupt an die Zentraleinheit, wenn die beiden Inhalte nicht gleich sind. Die zweite Vergleichslogik vergleicht den Inhalt des ersten Registers mit dem zweiten Register und gibt eine Übertragungseinrichtung frei, wenn die Inhalte der beiden Register gleich sind, und sperrt die Übertragungseinrichtung andernfalls.

Der Erfindung liegt die Aufgabe zugrunde, eine alternative Lösung zur Verwendung von zwei Mikrocomputern vorzuschlagen.

Das erfindungsgemäße System der Messwertüberwachung und Abschaltung bei Auftreten von Messwertabweichungen umfasst einen Mikrokontroller und ein FPGA (field programmable gate array), das eine erste FPGA-Teilschaltung und eine zweite FPGA-Teilschaltung aufweist, die jeweils ein SPI (serial peripheral interface) mit einem Schieberegister zur Aufnahme von Messwerten aufweisen, wobei, initiiert von einem der SPI, die Messwerte zwischen Mikrokontroller, erster FPGA-Teilschaltung und zweiter FPGA-Teilschaltung zyklisch ausgetauscht werden und miteinander auf Messwertabweichungen verglichen werden. Bei diesem Vergleich müssen die Messwerte der beiden FPGA-Teilschaltungen vollkommen identisch sein, während die Messergebnisse des Mikrokontrollers leicht abweichen dürfen, wenn die Messverfahren zwischen Mikrokontroller und den FPGA-Teilschaltungen nicht identisch sind.

Der Ausdruck "Messwert" ist hier ganz allgemein zu verstehen und soll jegliche Daten umfassen, die mit dem Zustand von zu überwachenden Anlagen im Zusammenhang stehen.

Die Durchführung des Messwertvergleichs kann wie folgt ausgeführt werden. Der beim Mikrokontroller gewonnene erste Messwert wird in einem SPI-Shift "normal" und in einem zweiten SPI-Shift "invers" zu der ersten FPGA-Teilschaltung und darauffolgend zu der zweiten FPGA-Teilschaltung gesendet. Gleichzeitig werden die Messergebnisse bei den FPGA-Teilschaltungen dem Mikrokontroller zugeführt, um mit den dort örtlichen Messwerten verglichen zu werden. Wenn der beim Mikrokontroller gewonnene Messwert mit den bei den FPGA-Teilschaltungen gewonnenen Messwerten übereinstimmt oder nur geringfügig abweicht, ist die Sicherheitsfunktion nicht betroffen, sofern die Abweichungen zur ersten und zweiten FPGA-Teilschaltung gleichartig sind. Sollten Differenzen auftreten, und stimmen die Messwerte der beiden FPGA-Teilschaltungen nicht überein, dann ist der Sicherheitsfall eingetreten und die Abschaltung der überwachten Anlage wird veranlasst.

. Zur Prüfung der Messwerte auf Übereinstimmung können Messwerte auch direkt zwischen den FPGA-Teilschaltungen ausgetauscht und auf Übereinstimmung verglichen werden.

Die Erfindung wird anhand eines Ausführungsbeispiels beschrieben. Dieses zeigt: ein Kaskade zum Abgleich einer dreikanaligen diversitäten Struktur in der Sicherheitstechnik.

Ein Mikrokontroller MC ist zu einem FPGA (field programmable gate array) in Reihe geschaltet, das eine erste FPGA-Teilschaltung FPGA 1 und eine zweite FPGA-Teilschaltung FPGA 2 enthält. Sowohl der Mikrokontroller MC als auch die beiden FPGA-Teilschaltungen enthalten jeweils ein SPI (serial peripherial interface). Jedes SPI enthält ein Schieberegister zur Aufnahme von Messwerten, die dem jeweiligen Schaltungsteil MC, FPGA1 oder FPGA2 zugeordnet sind. Das Messverfahren beim Mikrokontroller MC kann von dem Messverfahren bei den FPGA-Teilschaltungen unterschiedlich sein, sollte aber zu ähnlichen Messergebnissen führen. Die Messverfahren der beiden FPGA-Teilschaltungen sind identisch, sodass bei fehlerfreier Messung jeweils gleiche Messwerte erhalten werden. Diese Messwerte werden in die Schieberegister der FPGA-Teilschaltungen FPGA 1 und FPGA 2 eingegeben. Ebenso das Messergebnis bei dem Mikrokontroller, einmal "normal" und einmal "invers".

Der Abgleich der Messergebnisse erfolgt mit einem Sendeschritt vom Mikrokontroller MC aus. Der Messwert beim Mikrokontroller MC wird über das Schieberegister des SPI nacheinander in Normalform und in Inversform über die Leitung MOSI (master out slave in) dem SPI der FPGA-Teilschaltung FPGA 1 und SPI der FPGA 2 zugeführt, sodass sie zum Vergleich mit dem Messergebnissen bei den FPGA-Teilschaltungen FPGA 1 und FPGA 2 bereitstehen. Gleichzeitig werden die Messergebnisse bei den FPGA-Teilschaltungen FPGA 1 und FPGA 2 über die Leitung MISO (master in slave out) dem Mikrokontroller MC zugeführt. Die Steuerungen erfolgen über die Leitungen SS (Slave select) und SPLK (serial clock) .

Beim Empfangen initiiert der Mikrocontroller MC eine zweifache Messwertverschiebung. Bei der ersten Messwertverschiebung gelangt der Messwert der FPGA-Teilschaltung FPGA 2 in den SPI und kann mit dem örtlichen Messwert beim Mikrokontroller MC verglichen werden. Beim zweiten Verschiebeschritt gelangt der Messwert der FPGA-Teilschaltung FPGA 1 zum Mikrokontroller MC und muss mit dem zuerst empfangenen Wert der FPGA-Teilschaltung FPGA 2. übereinstimmen.

Das Vergleichsverfahren kann so ablaufen, dass die Daten der beiden FPGA-Teilschaltungen FPGA 1 und FPGA 2 aufaddiert und auf Konstanz überprüft werden. Dabei kann eine Darstellungsumformung der digital vorliegenden Messwerte vorgenommen werden. "Invers" bedeutet in diesem Zusammenhang, dass jedes Bit in einem Byte invertiert wird. Z. B. ist der Hexadezimalwert 0x56 in Binärschreibweise 01010110, daraus jedes Bit invertiert ergibt 10101001, was dann wiederum dem Wert 0xA9 in Hexadezimalschreibweise ergibt. Addiert man zwei Bytes, die invertiert zueinander sind, so ist das Ergebnis immer 0xFF=11111111. Ein anderes Beispiel ergibt:

$$0x8C + 0x73 \ (invers \ 0x8c) = 0xFF.$$

Der Messwertvergleich ist also außerordentlich einfach durchführbar.

Es ist auch möglich, dass die bei den FPGA-Teilschaltungen FPGA 1 und FPGA 2 gewonnenen Messwerte zwischen diesen beiden Teilschaltungen ausgetauscht werden, um direkt auf Übereinstimmung überprüft zu werden. Auch dabei kann man sich des geschilderten Vergleichsverfahrens bedienen.

Schließlich ist es auch möglich, statt FPGA-Teilschaltungen auch zwei getrennte FPGAs zu verwenden, was von den Ansprüchen umfasst sein soll.

## Patentansprüche

1.   System der Messwertüberwachung und Abschaltung bei Auftreten von Messwertabweichungen, umfassend:

   - einen Mikrokontroller (MC) enthaltend ein erstes SPI (serial peripheral interface) mit einem Schieberegister zur Aufnahme von ersten Messwerten, und
   - ein FPGA (field programmable gate array) enthaltend
   - eine erste FPGA-Teilschaltung (FPGA1) und ein zweites SPI (serial peripheral interface) mit einem Schieberegister zur Aufnahme von zweiten Messwerten,
   - eine zweite FPGA-Teilschaltung (FPGA2) und ein drittes SPI mit einem Schieberegister zur Aufnahme von dritten Messwerten,
   - wobei, initiiert von einem der SPI, die Messwerte zwischen Mikrokontroller, erster FPGA-Teilschaltung und zweiter FPGA-Teilschaltung zyklisch ausgetauscht werden und miteinander auf Messwertabweichungen verglichen werden.

2.   System nach Anspruch 1,
   wobei, ausgehend von dem Mikrokontroller, der erste Messwert in einem SPI-Shift "normal" und in einem weiteren SPI-Shift "invers" zu der ersten und zweiten FPGA-Teilschaltung gesendet werden, um mit dem zweiten Messwert bzw. dem dritten Messwert verglichen zu werden.

3.   System nach Anspruch 1 oder 2,
   wobei der Mikrokontroller einen zweifachen Shift initiiert und dabei den als dritten Messwert gesendeten Messwert empfängt und mit dem ersten Messwert vergleicht, alsdann den zweiten Messwert empfängt und auf Übereinstimmung mit dem dritten Messwert prüft.

4.   System nach Anspruch 2 oder 3,
   wobei die Daten der beiden FPGA-Teilschaltungen beim Mikrokontroller aufaddiert und auf Konstanz überprüft werden.

5.   System nach einem der Ansprüche 1 bis 4,
   wobei zwischen der ersten und der zweiten FPGA-Teilschaltung Messwerte direkt ausgetauscht und auf Übereinstimmung verglichen werden.

**Claims**

1. A system for monitoring measurement values and shutting down in case of measurement value deviations, comprising:

   - a microcontroller (MC) comprising a first SPI (Serial Peripheral Interface) including a shift register for receiving first measurement values; and
   - a FPGA (Field Programmable Gate Array) comprising
   - a first FPGA sub-circuit (FPGAl) and a second SPI (Serial Peripheral Interface) including a shift register for receiving second measurement values;
   - a second FPGA sub-circuit (FPGA2) and a third SPI including a shift register for receiving third measurement values;
   - wherein, initiated by one of the SPIs, the measurement values are periodically exchanged between the microcontroller, the first FPGA sub-circuit, and the second FPGA sub-circuit, and compared to one another for measurement value deviations.

2. The system according to claim 1, wherein the first measurement value is transmitted from the microcontroller to the first and second FPGA sub-circuits, "normally" in one SPI shift and "inversely" in a further SPI shift, to be compared with the second measurement value and the third measurement value.

3. The system according to claim 1 or 2, wherein the microcontroller initiates a two-fold shift and thereby receives the measurement value transmitted as a third measurement value and compares it to the first measurement value, then receives the second measurement value and checks it for agreement with the third measurement value.

4. The system according to claim 2 or 3, wherein the data of the two FPGA sub-circuits are added up and checked for consistency in the microcontroller.

5. The system according to any of claims 1 to 4, wherein the first and second FPGA sub-circuits directly exchange measurement value and compare them for agreement.

**Revendications**

1. Système de surveillance de valeur de mesure et de déconnexion en cas d'apparition d'écarts de mesure, comprenant :

   - un micro-contrôleur (MC) comportant une première liaison SPI (serial peripheral interface) avec un registre à décalage pour l'enregistrement de premières valeurs de mesure, et
   - un circuit logique programmable FPGA (field programmable gate array) comportant :
   - un premier circuit partiel FPGA (FPGA1) et une deuxième liaison SPI (serial peripheral interface) avec un registre à décalage pour l'enregistrement de deuxièmes valeurs de mesure,
   - un deuxième circuit partiel FPGA (FPGA2) et une troisième liaison SPI avec un registre à décalage pour l'enregistrement de troisièmes valeurs de mesure,
   - dans lequel, à l'initiative d'une des liaisons SPI, les valeurs de mesure sont cycliquement échangées entre le micro-contrôleur, le premier circuit partiel FPGA et le deuxième circuit partiel FPGA, et comparées les unes aux autres quant à leurs écarts de mesure.

2. Système selon la revendication 1,
   dans lequel, à partir du micro-contrôleur, la première valeur de mesure est adressée au premier et au deuxième circuits partiels FPGA avec un décalage SPI « normal » et avec un autre décalage SPI « inverse », pour être comparée à la deuxième valeur de mesure et à la troisième valeur de mesure.

3. Système selon la revendication 1 ou 2,
   dans lequel le micro-contrôleur initialise un double décalage et reçoit la valeur de mesure adressée comme troisième valeur de mesure et la compare à la première valeur de mesure, et reçoit ensuite la deuxième valeur de mesure et examine la concordance de celle-ci avec la troisième valeur de mesure.

4. Système selon la revendication 2 ou 3,

dans lequel les données des deux circuits partiels FPGA sont additionnées par le micro-contrôleur, et leur constance est contrôlée.

5. Système selon l'une des revendications 1 à 4,
dans lequel les valeurs de mesure sont directement échangées entre le premier et le deuxième circuits partiels FPGA, et comparées quant à leur concordance.

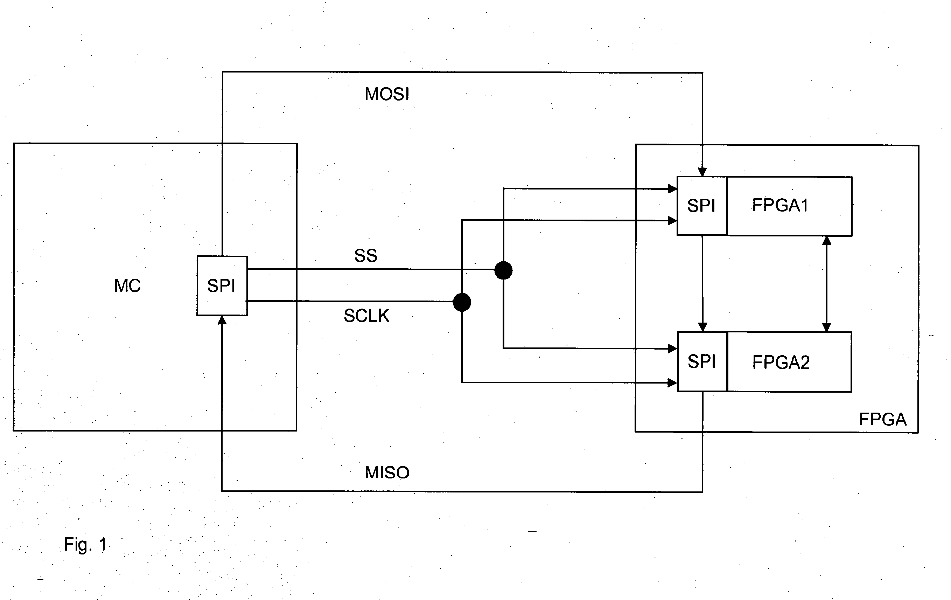

Fig. 1

EP 2 639 697 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100270987 A1
- EP 1962193 A1